# EUROPEAN PATENT SPECIFICATION

(11) **EP 3 870 007 B1**
(45) Date of publication and mention of the grant of the patent: **05.10.2022**
(21) Application number: 19795662.6
(22) Date of filing: 21.10.2019
(51) Int. Cl.: A47J 31/44

(54) **CALIBRATED ROTARY PRESSING DEVICE FOR GROUND COFFEE POWDER**
KALIBRIERTE DREHBARE PRESSVORRICHTUNG FÜR GEMAHLENES KAFFEEPULVER
DISPOSITIF DE PRESSAGE ROTATIF ÉTALONNÉ POUR POUDRE DE CAFÉ MOULU

(30) Priority: 24.10.2018 IT 201800009738
(43) Date of publication of application: 01.09.2021
(73) Proprietor: Fiorenzato M.C. Srl, 20155 Milano (IT)
(72) Inventor: ODDERA, Manuel, 30036 S. Maria di Sala (VE) (IT); LISSANDRON, Luca, 30036 S. Maria di Sala (VE) (IT)
(74) Representative: Spagnolo, Chiara
(86) International application number: PCT/IB2019/058941
(87) International publication number: WO 2020/084436

(56) References cited:
- WO-A1-2014/203073
- WO-A2-2008/081238
- KR-A- 20160 106 234
- KR-B1- 101 479 006
- KR-B1- 101 479 006
- US-A1- 2007 132 164

## Description

The present invention concerns a calibrated rotary pressing device for ground coffee powder; in particular, the proposed solution provides a calibrated and regular pressure, with a rotation of the disc only during the return of the operation lever.

### Field of the invention

The invention finds particular, but not exclusive application in the industrial sector of professional bar espresso equipment. In particular, it is proposed a useful lever device to optimally press and level the ground coffee powder dose that is dispensed in the wished quantity inside the filter of a filter-holding bowl for espresso coffee machines; said device being of type also called dynamometric lever tamper with rotation.

Generally, professional espresso machines, conventionally called coffee machines, are widely known, which essentially consist of a body comprising a boiler generating hot water and vapour that are delivered to one or more spout units passing through a corresponding number of filter-holding bowls containing the ground coffee. Therefore, their filter shall be previously filled with coffee powder by means of a specific machine suitable to grind and precisely dose coffee, also called coffee doser grinder apparatus. In particular, said filter-holding bowl shall be filled with the exact quantity of coffee powder depending on the number of doses to dispense and their quality; generally, in professional use, one or two doses are provided so as to prepare one or two espresso shots.

Beside said doser grinders, some devices able to press said freshly ground coffee dose dispensed inside the filter are also known and widespread, so as to level and even out the quantity therein contained in order to ease said extraction in the espresso coffee machine; such devices, in fact, are conventionally called ground coffee tampers. In principle, the most known tampers used at bars or at home are of manual type, also called coffee tamper or tamper in English, made of wood or plastic or steel, wherein a single-piece body is shaped like a rubber-stamp handle to be pressed with the palm of a hand, with the free downward-facing surface having a circular shape in order to adapt to the diameter of the filter and allow for a compression of the non-homogenous quantity of ground coffee therein; this operation levels said quantity and also expels the air trapped therein in order to give coffee powder a homogenous consistence and a regular shape so that water and/or water vapour then introduced in the filter may uniformly pass through ground coffee corresponding to the desired dose, correctly extracting the espresso coffee. The common practice of tamping the filter after grinding by using said tamper therefore allows to serve clients coffee shots having constant quality and doses, and also allows to considerably reduce the quantity of wasted coffee due to casual exit from the filter and/or to a bad extraction, thus reducing also dirtiness around the equipment and the consequent additional costs for cleaning.

Some improved solutions of said manual coffee tampers or tampers are also known, such as for example tampers integrating, within a hollow body, systems suitable to automatically measure and/or control the pressure actually exerted on the filter, which are conventionally called dynamometric tampers. Essentially, they integrate mechanical means of elastic type, such as one or more torsion springs, interposed between the hollow body of the tamper and a presser means axially sliding inside it in such a way that the compression load exerted on the filter does not exceed a given value, irrespective of the force applied outside by the palm of the hand; such means therefore act as a shock absorber and even load distributor on the ground powder. In some most evolved cases, the operator can also adjust the load transmitted to the interposed presser means, possibly including a measuring range with a mobile indicator shaped like a mechanical dynamometer.

Furthermore, the practice of compressing said ground coffee in the filter, using said manual tamper or tamper, with a slight rotation given by a twist movement of the wrist, is well known to professional operators that are more attentive to the quality of the service offered. Such trick allows to level and evenly distribute ground coffee, as well as simultaneously unstick coffee powder residuals tending to stick on the lower surface of the presser means due to adhesion to the surface and/or friction between materials and/or humidity or other concurrent causes. It has been furthermore observed that the operator shall execute said manual pressing operation with possible rotation with a special attention and accuracy in order to obtain a good pressing and extraction result, and also keep the quantity of ground coffee dispensed inside the filter, that is the exact dose, avoiding therefore wasting and disservices resulting from the powder falling out from the filter and/or from said residuals sticking to the presser means; such problems occur daily during professional practice, thus considerably limiting the quality offered and also making appliance cleaning operations longer and more complex.

Since many years, manual tampers of different shapes and/or materials, of static / single-piece or even dynamometric type, are available in the market of professional bar espresso equipment, which are sometimes designed to improve manual handling ergonomics or pressing quality. Among these, see, by way of example only, manual tampers of the dynamometric type, in US2004206243 (Foster et al.), US7325491 (Petiziol) or AU2014100166 (Friedman); among manual tampers easing the rotation thanks to an edge abutting to the filter, see for example KR101710100 (Choi Sun Wook et al.) or KR101314136 (Yeo Tae Geon).

In order to make pressing operation more repeatable, that is with a constant quality, as well as easy in the daily professional use, companies in the sector have proposed some improved solutions with a fixed load-bearing structure and a support fork for said filter-holding bowl, wherein a presser means, generally operated by a manual lever, translates in order to press ground coffee inside the filter in a controlled way; among them, solutions with tampers integrated in a special doser grinder apparatus are known, which share the same load-bearing structure as well as some elements, or more versatile solutions of the isolated type are known, and provided with a load-bearing counter-top structure, that is the so called stand-alone type, which are physically separated from other equipment, with which they only share said filter-holding bowl. We remind that each tamper corresponds to a particular filter diameter in order to carry out said compression, that is powder compaction, at the best. Among said isolatedtype solutions, that is of stand-alone type, we mention, by way of example only, the dynamometric lever tamper commercially called CPS, of the Italian company MACAP Srl, 30030 Maerne di Martellago VE - www.macap.it.

The present invention proposes an advantageous solution for a professional rotary, dynamometric tamper, with a manual operation lever vertically translating a mobile central unit, within which the presser means is in its turn vertically translated by a piston applying a constant and controlled force, exerting also a rotation such as to avoid the above-mentioned problems of sticking to the presser means and/or waste and/or reduction of the dose and/or cleaning. With reference to the preferred embodiment, a counter-top tamper of the above-mentioned isolated or stand-alone type, is described.

### Prior art

In order to determine the prior art related to the proposed solution, a conventional check in patent literature has been carried out by searching public archives, which lead to the identification of some prior art, among them:
D1 US6260457 (Tegel et al.);
D2 CPS TWIST, of the Italian company MACAP Sri, 30030 Maerne di Martellago VE - www.macap.it;
D3 WO2014203073 (Mazzer);
D4 WO2008081238 (Hughes).

D1 proposes a lever compression system translating a central presser block relative to a supporting cylinder fixed to the load-bearing structure, wherein said presser block internally includes a spring piston with a compression disc for pressing ground powder in the filter, which is suitable to help the action of the operator through an effective and antibreakout thrust, thus obtaining a homogeneous, as well as repeatable, compression for the following drink extraction.

D2 describes a dynamometric tamper for professional use, of the stand-alone type, which exerts a calibrated compression and a rotatory motion on the ground coffee powder, so as to press it and also improve its distribution in the filter for the following extraction in a cup by means of professional espresso machines. The presser means exerting a rotation too, is directly translated on the filter by means of a manual lever; it comprises a head, that is the end acting on said powder, which is made in a plastic material with a low coefficient of friction. In this regard, the same manufacturer also proposes a version of said tamper that is suitable to exert only compression and not rotation on the filter, wherein in that case the presser means head is made of steel.

D3 proposes a lever device that is frontally integrated in an automatic coffee doser grinder apparatus, in order to operate without moving the filter-holding bowl from the support fork, which is suitable to exert dynamometric pressure and rotation on ground coffee by means of a system wherein a manual lever directly translates a multi-element cylindrical group on the filter, where it abuts on the edge, then exerting a controlled thrust on the central presser with end disc. Said group is internally made up of multiple elements that are inserted one inside another in order to translate telescopically, with a central spring that pushes directly said presser with disc, which also rotates being sideways constrained by means of two opposed ends of a transverse pin integral with the presser itself; such ends protrude to the sides like pins with rollers, to slidingly engage on a couple of slits shaped as helical slots that are obtained opposite one another on a sleeve constrained to said presser, which is interposed as a retaining bushing between the external envelope cylinder and the internal spring. Such a system exerts a compression controlled by said internal spring on the powder contained in the filter, and simultaneously a rotation of the disc, which corresponds to the extension of said couple of slots, both during operation and return of the lever.

D4 describes a direct rotary pressing device operated by a lever connected to a cam that progressively pushes downwards a presser means provided with a disc at the lower end, and with an arm protruding sideways to the opposite end in such a way that it is pushed by the pins protruding from said cam, therefore rotating the disc simultaneously to the operation of the lever. The cam provides a pin to push forward when lowering the lever, and a pin for the return of the lever in raised position; if necessary, a spring is provided, which is directly engaged in said arm in order to facilitate said return to the initial position. Furthermore, in an evolved variant, a load cell is provided, which is suitable to supply digital information on the value of compression actually exerted on the filter.

### Drawbacks

We can reasonably agree that the known solutions of lever tampers suitable to exert a calibrated compression, that is of dynamometric type, on ground coffee powder inside the filter are easy to use and effectively prevent an excessive compression; however, it has been found that the known solutions, such as for example D1 - D4, produce an uneven compression, that is not sufficiently homogeneous and constant if considering the whole stroke of the presser means. Such a limit is even more clear when the lever is not completely operated or lowered, as it sometimes happens due to hurry or tiredness, or in the solutions with abutment edge and spring e.g. in D3; such solutions do not ensure a constant extraction quality of the espresso coffee dose. Generally, in fact, it is well known that said extraction quality mainly depends on the quantity of coffee inside the filter and on the results of its compaction; therefore, a compression carried out abutting on the filter with uneven thrust means, that is not regular and constant for its whole stroke, involves different results depending on the quantity actually contained therein.

Moreover, a drawback common to all the tampers suitable to exert a rotatory motion in the filter in order to level the quantity and unstick powder residuals sticking to the interface surface, both manual and professional lever tools such as in D2 - D4, is that during the rotation they often cause small or big losses of ground coffee powder falling out from the filter or sticking to the presser means. Consequently, the problem of not being able to keep the wished desired dose inside said filter is known and serious, with wasting and disservices resulting from said ground coffee falling out from the filter. It has been found that such problems occur daily during the professional practice, thus considerably limiting the quality of the service offered, fatiguing operators and making appliance cleaning operations longer and more complex.

Particularly, is not known and it is desirable a lever tamper solution producing said controlled pressure with thrust means such as to exert pressure in a calibrated and immediately available way, and that is contextually suitable to produce said rotatory motion of the disc in such a way as to solve the above-mentioned loss problems and/or falling out of the powder from the filter, therefore also facilitating the professional daily activity of an operator.

It has thus experimentally been found that the known rotary pressing solutions, such as in D2, D3 or D4, do not solve in a satisfactory way the above-mentioned problems of sticking to the presser means and/or loss and/or fall out of powder from the filter, and that this is also due to the fact that they contextually compress and rotate the presser means on a quantity of coffee powder that is substantially soft and non-homogenous, as it is freshly ground.

Moreover, it is also known that the above-mentioned problems involve an increase of overhead costs due to the wasting of coffee powder and to the frequent cleaning of the elements of the rotary pressing apparatus and/or the counter where it is placed.

An additional limitation found in the known rotary pressing devices, particularly in D3 and D4, is given by the fact that their construction is complex; moreover, D4 provides an unhygienic and bulky rotational system, with cantilevered moving elements.

Moreover, all known solutions allow a limited angle of rotation; among the most evolved solutions, we point out for example D3, wherein said slots acting as tracks are placed at the same height as a symmetrical pair and cannot provide a long extension unless they intersect one another and/or weaken said interposed sleeve integrating them.

Another drawback relates to tampers made from a plastic material of non-stick type, which possibly may improve the sliding on the coffee powder if compared to a standard steel surface; however, such plastic materials are not considered as optimal for a strong and prolonged professional use. For example, in D2 it has been found that said presser means is practically coated with a material with low coefficient of friction and suitable for food use such as polytetrafluoroethylene, with PTFE acronym, used in that case to facilitate said rotation reducing the sticking of the coffee powder residuals if compared to a steel surface. However, with a strong use as it occurs in a daily professional activity of a bar, such a PTFE coating tends to deteriorate and/or show micro cracks, thus losing its initial non-sticking and cleanability qualities, with a progressive increase of friction; moreover, it is also known the possibility that a such material, when deteriorated, may be to some extent toxic for humans and/or for the environment. For such reasons, therefore, for professional use, it is preferable to look for an improved solution for the system exerting said pressure and said rotation, in order to limit and/or eliminate the above-mentioned problems of sticking as compared to a conventional friction reduction of the interface surface.

Given the above, it is reasonable the need of the companies of the sector for identifying innovative solutions that are able to overcome at least the above-mentioned problems.

### Summary of the invention

These and other aims are achieved with the present invention according to the characteristics described in the attached claims, solving the problems set forth by means of a rotary pressing device (10) for ground coffee powder, suitable to exert a calibrated and regular compression, as well as a rotation only during the return of the operation lever, thus reducing the known problems of powder sticking to the disc (110), dose reduction and additional costs. The rotary pressing unit (100) comprises a cylindrical body (101) with a nitrogen piston (102, 103) that axially pushes a shaft (104) which then transfers said compression to the disc, which has a helical slot (105) serving as an integrated track, wherein a pin (106) integral with the cylindrical body passes through in order to cause its rotation upon itself simultaneously with the vertical sliding. Between the shaft and the disc, a one-way type bearing (108) is interposed, which is housed in a bushing (109) connected to the disc and transfers the rotation of the shaft only during the return of the lever and not during the operation movement.

### Aims

In this way, by the considerable creative contribution whose effect constitutes an immediate and important technical progress, different and important aims are achieved.

A first aim has been to make an improved dynamometric pressing and rotation device for ground coffee powder, of the type operated by means of a manual operation lever, which is suitable to press the dose contained in the filter in a controlled and regular way, from the beginning to the end of the action, by means of a gas-type pushing spring; in particular, it is envisaged to use a nitrogen piston suitable to exert a immediately available, calibrated, constant and regular, and long-lasting force, that is for a number of cycles that is generally higher than those predicted for the intended use.

A second aim, concomitant to the first, has been that of making said device in such a way as to transfer to the pressing disc also a rotatory motion so as to considerably reduce the known problems of powder falling out and/or sticking to the presser means and/or reduction of the residual dose after pressing and/or dirtiness and hygiene. In particular, to that aim, an innovative rotational system is proposed, which allows a wide angle and acts only during the return of said lever, and not during the operation phase, in order to act on already compressed coffee powder and therefore harder and more uniform as its mass is compact, in such a way that it easily comes off in one piece without flaking apart and/or leaving residuals on the disc. It has in fact experimentally been found that a rotation only during the return of the lever is extremely advantageous because coffee powder does not stick to the underside of the disc, as it happens in all known solutions.

A third aim, closely related to said first and second aims, has been to make a pressing and rotation device able to keep in the filter the exact desired dose of previously ground and dispensed coffee powder, and being perfectly compressed and levelled for the following espresso coffee extraction with optimal quality.

A fourth aim has been to make a pressing and rotation device that reduces dirtiness of the equipment and the consequent need to clean them, thus reducing overhead costs.

A fifth aim has been to make a pressing and rotation device suited for heavy-duty professional use, equipped with a particular rotary pressing unit of compact type and consisting of a limited number of mechanical pieces able to work axially in order to achieve the above-mentioned aims in a technically advanced, repeatable and economical way.

Another aim has been to make an easily cleanable and sanitizable device.

These and other advantages will appear from the following detailed description of some preferred embodiments taken in conjunction with the attached schematic drawings, whose execution details shall not be considered as limiting, but illustrative only.

### Content of drawings

Figure 1 is a front view of the calibrated rotary pressing device according to the present invention, with the rotary pressing unit shown in a dashed box and with a section of the filter for the ease of comprehension;
Figure 2 is an exploded axonometric view of the rotary pressing unit shown in the dashed box of Fig. 1;
Figure 3 is an axonometric overall view of the rotary pressing unit of the previous figures, with the translation and operation mechanism that is schematically illustrated with dashed lines;
Figures 4 and 5 show a vertical section of the rotary pressing unit taken along the centreline, respectively in non-active position (Fig. 4) that is before operation, and in operation position at the end of the stroke (Fig. 5);
Figure 6 is an enlarged detail view of Fig. 4;
Figure 7a, 7b and 7c represent a raised view of the calibrated rotary pressing device object of the invention, respectively in the initial position (Fig. 7a), in the position starting the dynamometric compression (Fig. 7b) and in the end-stroke position with lowered lever (Fig. 7c);
Figures 8a, 8b and 8c represent a plan view of the position of the disc during the lever lowering phase, that is in operation movement, respectively in the same positions as above (Figs. 7a, 7b, 7c) shown in section at the section plane X1 - X1 (Figs. 7a and 8a), at the section plane X2 - X2 (Figs. 7b and 8b) and at the section plane X3 - X3 (Figs. 7c and 8c);
Figure 9 represents a plan view of the position of the disc at the end of the lever raise phase, that is returned to the initial position shown in (Figs. 7a, 8a), where the position reference in the disc is rotated towards the end of stroke, from where the following operation will restart;
Figures 10a, 10b and 10c, finally, represent the rotary pressing device shown in the previous figures (Figs. 7a, 7b, 7c), in a vertical section view along the centreline in the corresponding position.

### Practical execution of the invention

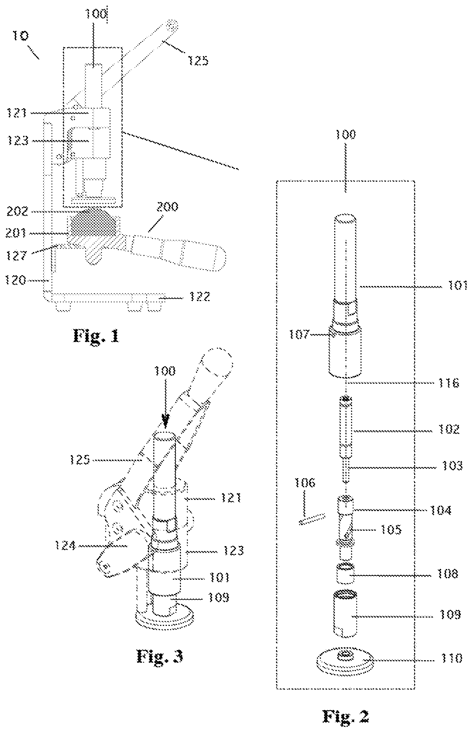

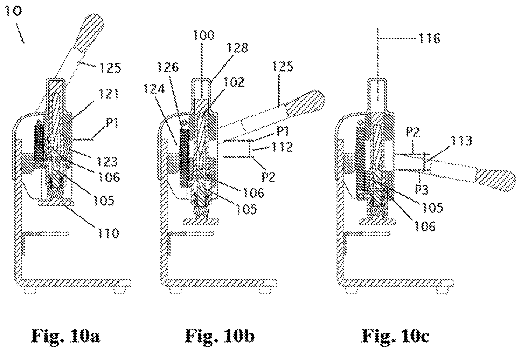

With reference to the figures too (Figs. 1 - 10c), the invention proposed relates to an innovative dynamometric rotary device (10) for ground coffee powder, suitable for a professional use, wherein an operation lever vertically dislocates a particular rotary pressing unit (100) until it is above the filter, and which (100) is equipped with a calibrated and constant thrust means and exerts a rotation only during the phase of return of the lever. The proposed solution allows to obtain an optimal result in compacting ground coffee powder and contextually resolves or considerably limits the above-mentioned problems of sticking to the disc, of reduction of the actually extracted dose, of hygiene, of waste and additional costs as set forth above.

In principle, the proposed device (Figs. 1 - 3) provides an innovative calibrated pressing system with a force equal to 20 Kg, immediately available from the beginning of the action of said rotary pressing unit (100), and axially transmitted by a gas spring of the nitrogen piston type that is placed inside a hollow steel cylinder (101) wherein a rotary shaft (104), placed on the same thrust axis, transfers in its turn said force to a telescopic bushing (109) wherein the disc is fixed. Said rotary pressing unit (100) is mounted on a mobile plate (123) connected to a lever (125) mechanism (124) that allows its vertical translation; the return is ensured by an extension spring (126) connecting all such mobile elements (100, 123 - 125) to a fixed plate (121) integral with the load-bearing structure (120, 122). The rotation is given by a kinematic system made up of a transverse cylindrical pin (106) of fixed type engaging on said rotary shaft (104) as it is provided with a special helical machining, of the passing-through slot type, characterised by a total extension corresponding to a maximum angle of opening equal to 150°. For the purpose of the invention, inside said bushing (109), between said rotary shaft (104) and the disc (110), a special one-way rotational means is inserted, which rotates idle during the lowering of the lever and which instead transfers said rotation of the shaft to the disc when said lever is raised.

As regards the operation of the proposed device (10) (Figs. 1, 3), when said lever (125) is operated rotating it downwards, as this is connected to said mobile plate (123) wherein said rotary pressing unit (100) acting as a dynamometric rotary means with a calibrated and regular thrust is fixed, the whole kinematic system lowers vertically taking advantage of the idle or non-dynamometric stroke, until it meets the resistance due to the compaction of the ground coffee (202) inside the filter (201) of the filter-holding bowl (200) placed in the fork (127). After the compression of ground coffee powder, we move on to the following step wherein the nitrogen piston (102) intervenes during the whole stroke (111) of the rod (103), thus exerting a calibrated dynamometric pressing force of 20 Kg. The rotation of the disc (110) intervenes only during the return of the lever (125), after having completed the pressing phase at 20 kg; the absence of rotation during the operation movement of the lever, but on the contrary exerting it during the return phase, is achieved by interposing a one-way bearing (108), that is of freewheel type, between the rotary shaft (104) and the telescopic bushing (109) wherein the disc (110) is fixed, as said bearing (108) is housed in the same (109).

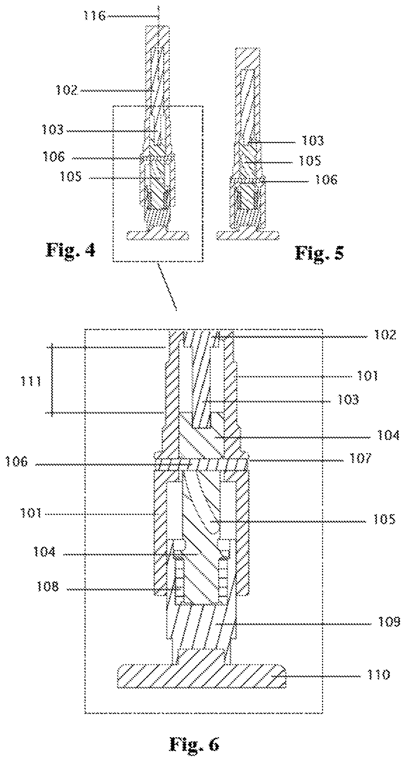

We remind that a freewheel bearing (108) is a mechanical element that, coupled at the external diameter and with a pin fixed in the internal diameter, transmits the rotatory motion of said pin in a single direction and not in the opposite direction, rotating idle like a traditional bearing. Therefore, during the operation movement, when the piston (102 - 103) intervenes (Figs. 4, 6, 7b, 8b), the rotating shaft (104) begins to rotate thanks to said pin (106) that passes through it in the passing-through and helical slot (105) (Fig. 2), but as said freewheel bearing (108) is interposed between the same and the telescopic bushing (109), wherein the disc (110) is fixed in its turn, the rotatory motion is not transmitted; as a consequence, during the dynamometric pressing the disc does not rotate (Figs. 5, 7c, 8c, 10c). Freewheel, drawn cup needle roller bearings, with reduced overall radial dimension and suitable to bear a high torque in a single direction, are especially appropriate for the invention; by way of non-limiting example, bearings conventionally called HF, of the Italian company ISB - Italcuscinetti Spa, Rubiera (RE) - www.isb-bearing.com, are suitable.

The pressing during the return of the lever occurs in a different way: the lever (125) is followed through during the raise while the nitrogen piston (102) releases its compression, but continues to act on the rotary shaft (104) and the ground coffee (203), rotating said shaft in the direction opposite to the operation movement. In this case, the shaft (104) begins to rotate thanks to said cylindrical pin (106) passing through it in the slot (105) as said one-way bearing (108) is interposed between the same and the telescopic bushing (109), and is in its turn fixed to the disc (110), therefore, said rotatory motion is transmitted generating a rotation of the disc of 150°. Then, the following rotation will start from the point where the previous one has been completed.

We have experimentally checked that using said nitrogen piston, instead of a conventional spring, ensures the wished thrust value from the first millimetres of stroke of the rod (103), that is a calibrated compression force that remains constant and regular for its whole stroke (111), while a conventional spring on the contrary has an exponential operating load, that is depending on the pressure. Moreover, in the specific application provided in the invention, a nitrogen piston ensures a substantially greater duration than the operational life of the pressing apparatus. For the purpose of the invention, in particular, it has been found that said one-way rotary movement transmitted to the disc in a single direction during the lever return phase, is extremely advantageous as it avoids that coffee powder sticks to the underside of the disc; it has in fact been found that such an advantageous effect is mainly due to the fact that said rotation during the lever raise phase occurs on coffee powder already compressed in the previous lever lowering phase, and therefore harder like a compact mass that tends to unstick in one single piece, without flaking apart and/or leaving residuals on the disc.

In a more detailed embodiment of a compression and rotation apparatus achieving all the pre-set aims, with means able to transmit, to the disc (110), a motion of translation along a vertical axis and of rotation as well on the same axis, and rotating idle during the lowering of the lever thus exerting only compression on the disc, while transferring compression and also rotation during the raise, for the purpose of the invention, it is therefore proposed a combination of mechanical thrust elements (102 - 105, 109 - 110) that are vertically aligned along the longitudinal barycentre axis (116) corresponding to the vertical translation axis, that is the dislocation axis, with a lever (124 - 125) to approach to the filter, combining a calibrated thrust means such as a particular gas spring of nitrogen piston type (102) with a central rod (103) that translates back and forth axially pushing a shaft, which in its turn pushes and also rotates upon itself, being provided with a passing-through helical slot (105) engaged on the cylindrical transverse pin (106) fixed to an external containment sleeve like a hollow cylinder (101), which is then pivotally connected at its lower end on said bushing (109) of the disc (110) interposing said one-way bearing (108) having its vertical rotation axis corresponding to said shaft (104, 116), in such a way that it rotates idle in the rotation direction corresponding to the operation movement, that is when lowering the lever (125), and transfers said rotatory motion of the shaft (104 - 105) to disc only during the return phase.

In this way, compression and rotation are transferred to the already compressed coffee powder (110, 203) during the raise of the lever (125) and with said rod (103) in operation; the shaft instead rotates idle (104, 108) exerting only compression (110, 202) during the lowering of the lever. Hence, said advantage of exerting a rotation on powder already compacted; furthermore, we achieve the advantage of a progressive rotation in a single direction, this trick being sometimes favourable, for the purpose of the invention, if compared to a conventional back-and-forth rotation.

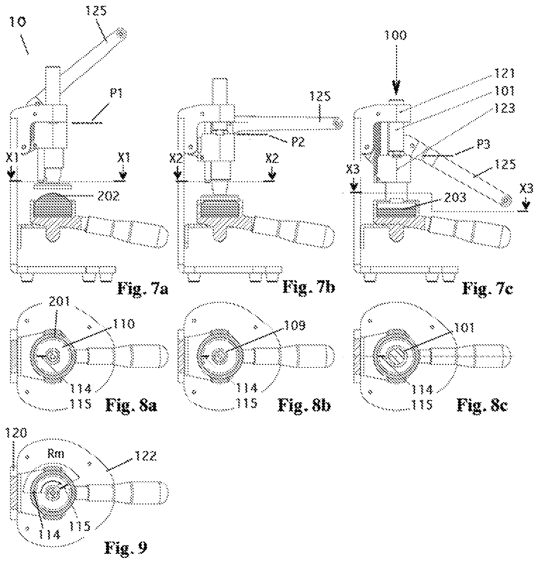

More in detail, the device proposed by the invention (10), made as described above, envisages the following sequence of operations during its operation: starting from an initial position (P1) with raised lever (Figs. 7a, 8a, 10a), in operation movement, that is when lowering the lever (125), there is a first, free-stroke dislocation phase (112) of the mobile plate (123) with the rotary pressing unit (100), which lasts until it meets the ground coffee (202), also comprising a first non-calibrated pressure on the powder, therefore with the rod (103) still being completely extended, until it reaches the position (P2) (Figs. 7b, 8b, 10b) where the calibrated dynamometric pressure starts, which is immediately available thanks to an advantageous gas spring (102) of nitrogen piston type, wherein the transverse pin (106) preferably reaches the end-stroke position (P3) of the slot (105, P3) (Figs. 7c, 8c, 10c). Therefore, in the return phase of the lever (125), that is when raising it with the help of the extension or return spring (126), said rotation of the disc (110) occurs in combination with the calibrated pressure of the previous phase (113), when raising the lever and at least until the deactivation of said nitrogen piston, completing the angle (Rm) provided by the helical machining of the rotating shaft; finally, with an additional raise of the lever we achieve a complete release and return to the initial position (P1).

Still about the envisaged angle of rotation of the shaft (104, 105), for the purpose of this invention, we have experimentally found that greater advantages are achieved with a maximum rotation (Rm) of the disc (110) equal to 150° (Fig. 9), given by said helical machining of the shaft (104) that acts as an integrated slot (105); however, the professional operator can decide not to complete the piston stroke (102 - 103, 111) depending on particular conditions of use, or for a faster service, or due to the type of coffee used, or to the style of preparation of the espresso or other needs, obtaining in any case an optimal calibrated compression also with an effective rotation on the already compressed coffee powder during the return of the lever.

Moreover, it is observed that said rotary pressing unit (100), in the preferred embodiment (Figs. 1 - 6), is advantageously integrated in a stand-alone countertop system (Fig. 1, 7a - 7c), for example a load-bearing structure (120) with a base (122) comprising a fixed plate (121) coupled to a corresponding mobile plate (123) vertically movable by means of a lever (125) mechanism (124) (Fig. 3), which (123) supports said rotary pressing unit (100) translating it on the filter (201) so as to act in an optimal way on the ground coffee (202), along its own longitudinal axis (116). However, the advantageous rotary pressing system proposed in the present invention, with particular reference to said rotary pressing unit (100 - 110), in a variant embodiment may also be integrated in a typical professional bar equipment such as a coffee doser grinder or an espresso coffee machine; furthermore, it can be operated in a manual or automatic way, i.e. with the help of electrical and mechanical systems instead of lever-operated mechanical means.

### Reference

(10) calibrated rotary pressing device with rotation during the lever return phase, for ground coffee powder, as provided in the present invention; said device being of the type also called dynamometric lever tamper with rotation;
(100) integrated rotary pressing unit, with one-way rotation only during the lever return phase, according to the present invention;
(101) hollow steel cylindrical body, intended to house elements, fixed to the mobile plate;
(102) gas pushing spring, of the nitrogen piston type;
(103) piston rod or central pusher;
(104) rotating shaft, with passing-through helical slot;
(105) passing-through helical slot;
(106) cylindrical transverse pin, fixed to holes on the cylindrical body;
(107) pin-fixing hole;
(108) one-way bearing or freewheel;
(109) telescopic bushing;
(110) disc;
(111) stroke or total excursion of gas spring;
(112) free stroke, with gas spring at rest;
(113) dynamometric stroke, with pressing force adjusted by means of the gas spring that is calibrated on a set thrust value;
(114) fixed start reference;
(115) position reference of the disc;
(116) longitudinal barycentre axis of the rotary pressing unit, corresponding to the vertical axis of sliding of the internal shaft and also to the axis of displacement by means of the lever mechanism;
(120) load-bearing structure;
(121) fixed plate of the load-bearing structure;
(122) base;
(123) mobile plate, vertically displaceable with lever and spring;
(124) displacement mechanism of the mobile plate;
(125) operation lever;
(126) extension spring;
(127) fork;
(128) cover;
(200) filter-holding bowl, for espresso machines;
(201) filter;
(202) freshly ground coffee powder, not pressed;
(203) ground coffee powder, pressed;
(P1 - P3) main displacement positions of the pressing unit, to operate the lever. (P1) is the initial position without displacement with lever lifted in rest condition, wherein the rod of the gas spring is completely extended and the transverse pin is on the upper stop of the slot in the shaft. (P2) is the starting position of the thrust action of the gas spring, which is calibrated and regular during its whole stroke. (P3) is the final position at maximum displacement with lowered lever, wherein the transverse pin reaches the lower stop of said slot, down, without transferring the rotation to the disc during the operation movement thanks to the one-way bearing interposed therein.
(Rm) maximum rotational angle of the disc, corresponding to the whole excursion of the helical slot.

## Claims

1. Calibrated rotary pressing device (10) for ground coffee powder, of the type called lever dynamometric tamper and intended to exert compression and rotation on the dose of coffee (202 - 203) that is ground and dispensed (202) inside the filter (201) of a filter-holding bowl (200), which (10) comprises a load-bearing structure (120) with a lever (125) that vertically translates a cylindrical rotary pressing unit (100) that integrates telescopic means, which are connected at the lower end to a circular disc (110) and which are intended to compact in a controlled way the coffee in said filter (201) and comprise a pushing spring that, by activating said lever (125), transfers onto said telescopic means and thus onto said disc a calibrated, that is to say dynamometric, pressure; said rotary pressing unit (100) also integrating means for rotation simultaneous to the activation of said lever (125) and to said calibrated pressure; said rotary pressing device (10) **being characterised in that** said rotary pressing unit (100) transfers said rotation to the disc (110) only in the phase of return of the activation lever (125), that is to say, lifting it, by means of internal movement means (101 - 110) vertically integrated along a longitudinal barycentric axis (116); said rotary pressing unit (100 - 110), of the compact type and consisting of an internally hollow cylindrical body (101), being closed on the top and open on the bottom for housing a pushing spring of the gas piston type (102) arranged in abutment on the top so that the rod (103) protrudes downwards and pushes, along said axis (116), a shaft (104, 116) constrained to it (103) in such a way as to slide on the same axis (116) transferring to said disc (110, 202 - 203) a calibrated and regular compression during its stroke (111, 125), and wherein said shaft (104) is also provided with a helical passing-through slot (105), which is crossed by a transverse pin (106) that is integral with the cylindrical body (101) being horizontally fixed on two holes (107) obtained in it, said slot (105) causing said shaft (104) to rotate on itself simultaneously to said vertical sliding (116, 125), like one single integrated track; and wherein between said shaft (104) and said disc (110) a bearing (108) is interposed, which is of the one-way type, that is to say, freewheeling in one direction of rotation, and which is housed in a bushing (109) connected to the disc (110), in such a way as to transfer to it (110) the rotary motion of said shaft (104 - 105) only in the phase of return of said lever (103, 125, 203) and not in the operation movement, thus freewheeling during the lowering of the lever (103, 125) only with compression on said powder (202).

2. Calibrated pressing device (10), according to the previous claim, **characterised in that** it provides a load-bearing structure (120) with a fixed plate (121) that constrains a mechanism (124) actuated by said lever (125) and assisted by a return spring (126), which vertically displaces a corresponding mobile plate (123) which in its turn supports and vertically translates said rotary pressing unit (100 - 110).

3. Calibrated pressing device (10), according to claim 1 or 2, **characterised in that** said gas piston (102 - 103) contains nitrogen, it being a nitrogen piston that exerts an immediately available, constant and calibrated force of 20 Kg with a tolerance of +/- 20%.

4. Calibrated pressing device (10), according to claim 1 or 2 or 3, **characterised in that** the extent of said sliding and of said rotation of said shaft (104, 116) depend on the extension of the rod (103, 125) and simultaneously on the development of the slot (105 - 106), which corresponds at least to the extension (111) of the rod (103) and at most enables an angle of rotation (Rm) of the disc (110) of 150° with a tolerance of +/- 20%.

## Patentansprüche

1. Kalibrierte drehbare Pressvorrichtung (10) für gemahlenes Kaffeepulver, die als dynamometrischer Stampfer mit Hebel bezeichnet wird und dazu bestimmt ist, Druck und Drehung auf die gemahlene und ausgegebene (202) Kaffeedosis (202 - 203) auszüben, die innerhalb des Filters (201) einer Filterhalteschale (200) ist, die (10) eine tragende Struktur (120) mit einem Hebel (125) umfasst, der eine zylindrische drehbare Presseinheit (100) vertikal verschiebt, die Teleskopmittel integriert, die am unteren Ende mit einer kreisförmigen Scheibe (110) verbunden sind, und die dazu bestimmt sind, den Kaffee in dem Filter (201) kontrolliert zu kompaktieren und eine Druckfeder umfassen, die durch Betätigen des Hebels (125) einen kalibrierten, das heißt dynamometrischen Druck auf die Teleskopmittel und somit auf die Scheibe überträgt; wobei die drehbare Presseinheit (100) auch Mittel zur gleichzeitigen Drehung mit der Aktivierung des Hebels (125) und mit dem kalibrierten Druck integriert; wobei die drehbare Pressvorrichtung (10) **dadurch gekennzeichnet ist, dass** die drehbare Presseinheit (100) die Drehung auf die Scheibe (110) nur in der Phase der Rückkehr des Aktivierungshebels (125) überträgt, das heißt Anheben mittels interner Bewegungsmittel (101 - 110), die vertikal entlang einer baryzentrischen Längsachse (116) integriert sind; wobei die drehbare Presseinheit (100 - 110) vom kompakten Typ ist und aus einem innen hohlen zylindrischen Körper (101) besteht, der oben geschlossen und unten offen ist, um eine Druckfeder vom Gaskolbentyp (102) aufzunehmen, die oben anliegend angeordnet ist, so dass die Stange (103) nach unten vorsteht und entlang der Achse (116) eine Welle (104, 116) schiebt, die an ihr (103) so befestigt ist, dass sie auf derselben Achse (116) gleitet, indem sie auf die Scheibe (110, 202 - 203) eine kalibrierte und regelmäßige Kompression während ihres Hubs (111, 125) überträgt, und wobei die Welle (104) auch mit einem spiralförmigen Durchgangsschlitz (105) versehen ist, der von einem Querstift (106) gekreuzt wird, der integral mit dem zylindrischen Körper (101) ist, der an zwei darin erhaltenen Löchern (107) befestigt ist, wobei der Schlitz (105) bewirkt, dass sich die Welle (104) gleichzeitig mit dem vertikalen Gleiten (116, 125) um sich selbst dreht, wie eine einzige integrierte Schiene; und wobei zwischen der Welle (104) und der Scheibe (110) ein Lager (108) angeordnet ist, das vom Einwegtyp ist, das heißt in einer Drehrichtung freilaufend, und das in einer Buchse (109) untergebracht ist, die mit der Scheibe (110) so verbunden ist, dass sie die Drehbewegung der Welle (104 - 105) nur in der Phase der Rückkehr des Hebels (103, 125, 203) auf sie (110) überträgt und nicht in der Betriebsbewegung, also Freilauf während des Absenkens des Hebels (103, 125) nur mit Kompression auf das Pulver (202).

2. Kalibrierte Pressvorrichtung (10) nach dem vorhergehenden Anspruch, **dadurch gekennzeichnet, dass** sie eine tragende Struktur (120) mit einer festen Platte (121) bereitstellt, die einen Mechanismus (124) einschränkt, der durch den Hebel (125) betätigt wird, und durch eine Rückstellfeder (126) unterstützt wird, die eine entsprechende bewegliche Platte (123) vertikal verschiebt, die ihrerseits die drehbare Presseinheit (100 - 110) trägt und vertikal verschiebt.

3. Kalibrierte Pressvorrichtung (10) nach Anspruch 1 oder 2, **dadurch gekennzeichnet, dass** der Gaskolben (102 - 103) Stickstoff enthält, wobei es sich um einen Stickstoffkolben handelt, der eine sofort verfügbare, konstante und kalibrierte Kraft von 20 kg mit einer Toleranz von +/- 20 % ausübt.

4. Kalibrierte Pressvorrichtung (10) nach Anspruch 1 oder 2 oder 3, **dadurch gekennzeichnet, dass** das Ausmaß des Gleitens und der Drehung der Welle (104, 116) von der Verlängerung der Stange (103, 125) abhängt und gleichzeitig von der Entwicklung des Schlitzes (105 - 106), der mindestens der Verlängerung (111) der Stange (103) entspricht und höchstens einen Drehwinkel (Rm) der Scheibe (110) von 150° mit einer Toleranz von +/- 20% ermöglicht.

## Revendications

1. Dispositif de pressage rotatif calibré (10) pour poudre de café moulu, du type appelé presseur dynamométrique à levier et destiné à exercer une compression et une rotation sur la dose de café (202 - 203) qui est moulu et distribué (202) à l'intérieur du filtre (201) d'un bol porte-filtre (200), qui (10) comprend une structure porteuse (120) avec un levier (125) qui translate verticalement une unité de pressage rotatif cylindrique (100) qui intègre des moyens télescopiques, qui sont reliés au niveau de l'extrémité inférieure à un disque circulaire (110) et qui sont destinés à compacter de manière contrôlée le café dans ledit filtre (201) et comprennent un ressort de poussée qui, en activant ledit levier (125), transfère sur lesdits moyens télescopiques et ainsi sur ledit disque une pression calibrée, c'est-à-dire dynamométrique ; ladite unité de pressage rotatif (100) intégrant également des moyens pour la rotation simultanément avec l'activation dudit levier (125) et avec ladite pression calibrée ; ledit dispositif de pressage rotatif (10) étant **caractérisé en ce que** ladite unité de pressage rotatif (100) transfère ladite rotation au disque (110) uniquement dans la phase de retour du levier d'activation (125), c'est-à-dire en le soulevant, par l'intermédiaire de moyens de déplacement internes (101 - 110) intégrés verticalement selon un axe barycentrique longitudinal (116) ; ladite unité de pressage rotatif (100 - 110), du type compact et constituée d'un corps cylindrique creux intérieurement (101), étant fermé sur le dessus et ouvert sur le dessous pour loger un ressort de poussée du type piston à gaz (102) arrangé en butée sur le dessus de sorte que la tige (103) fait saillie vers le bas et pousse, selon ledit axe (116), un arbre (104, 116) qui est contraint à cela (103) de manière à coulisser sur le même axe (116) en transférant audit disque (110, 202 - 203) une compression calibrée et régulière pendant sa course (111, 125), et où ledit arbre (104) est également pourvu d'une fente traversante hélicoïdale (105), qui est croisée par une cheville transversale (106) qui est solidaire du corps cylindrique (101) en étant fixée horizontalement sur deux trous (107) pratiqués dans cela, ladite fente (105) faisant tourner ledit arbre (104) sur lui-même simultanément avec ledit coulissement vertical (116, 125), comme une seule piste intégrée ; et où entre ledit arbre (104) et ledit disque (110) un roulement (108) est interposé qui est du type unidirectionnel, c'est-à-dire en roue libre dans un sens de rotation, et qui est logé dans une douille (109) reliée au disque (110), de manière à transférer à cela (110) le mouvement de rotation dudit arbre (104 - 105) uniquement dans la phase de retour dudit levier (103, 125, 203) et non pas dans le mouvement opérationnel, donc en roue libre lors de la descente du levier (103, 125) uniquement avec compression sur ladite poudre (202).

2. Dispositif de pressage calibré (10), selon la revendication précédente, **caractérisé en ce qu'**il comporte une structure porteuse (120) avec une plaque fixe (121) qui contraint un mécanisme (124) actionné par ledit levier (125) et assisté par un ressort de rappel (126), qui déplace verticalement une plaque mobile correspondante (123) qui à son tour supporte et translate verticalement ladite unité de pressage rotatif (100 - 110).

3. Dispositif de pressage calibré (10), selon la revendication 1 ou 2, **caractérisé en ce que** ledit piston à gaz (102 - 103) contient de l'azote, cela étant un piston à azote qui exerce une force immédiatement disponible, constante et calibrée de 20 Kg avec une tolérance de +/- 20%.

4. Dispositif de pressage calibré (10), selon la revendication 1 ou 2 ou 3, **caractérisé en ce que** l'étendue dudit coulissement et de ladite rotation dudit arbre (104, 116) dépendent de l'extension de la tige (103, 125) et simultanément du développement de la fente (105 - 106), qui correspond au moins à l'extension (111) de la tige (103) et permet au plus un angle de rotation (Rm) du disque (110) de 150° avec une tolérance de +/- 20%.
